Europäisches Patentamt

European Patent Office

Office européen des brevets

(19)

(11) **EP 0 947 913 B1**

(12) **FASCICULE DE BREVET EUROPEEN**

(45) Date de publication et mention
de la délivrance du brevet:
**30.05.2001 Bulletin 2001/22**

(51) Int Cl.⁷: **G06F 7/52**, G06F 7/72

(21) Numéro de dépôt: **99470010.2**

(22) Date de dépôt: **23.03.1999**

(54) **Procédé de réalisation amélioré d'une division entière**

Verbessertes Verfahren zur Ausführung ganzzahliger Division

Improved method of implementing integer division

(84) Etats contractants désignés:
**DE FR GB IT**

(30) Priorité: **02.04.1998 FR 9804273**

(43) Date de publication de la demande:
**06.10.1999 Bulletin 1999/40**

(73) Titulaire: **STMicroelectronics SA**
**94250 Gentilly Cedex (FR)**

(72) Inventeur: **Monier, Guy**
**57000 Metz (FR)**

(74) Mandataire: **Ballot, Paul Denis Jacques**
**Cabinet Ballot**
**9 Rue Claude Chappé**
**57070 Metz (FR)**

(56) Documents cités:
**WO-A-97/25668**

- **KNUTH D E: "The art of computer programming.
Vol.2. Seminumerical algorithms. 2nd edition"
1981 , READING, MA, USA, ADDISON-WESLEY,
USA , ISBN 0-201-03822-6 XP002087308 151940
section 4.3: pages 250-265 * page 256, ligne 16 -
page 258 ***

**Description**

L'invention concerne un procédé de réalisation d'une division entière mis en oeuvre dans un coprocesseur d'arithmétique modulaire. Il trouve une application par exemple en cryptographie, lorsque l'on utilise un codage de type RSA mettant en oeuvre une arithmétique modulaire.

Tel que décrit dans la demande internationale WO-A-9725668, on connaît déjà des coprocesseurs d'arithmétique modulaire permettant de mettre en oeuvre des exponentiations modulaires, ce type d'opération permettant de crypter et de décrypter des messages binaires codés selon un codage de type RSA. Ce type de coprocesseur, décrit par exemple dans la demande de brevet européen 0 601 907, ne permet pas de réaliser des divisions entière. Or, l'utilisation d'un codage RSA nécessite la réalisation de telles divisions. On est donc amené à utiliser un processeur pour réaliser ces divisions, ce qui est pénalisant en terme de durée de calcul et nécessite l'utilisation d'une mémoire de programme et de donnée de taille importante.

La demande WO-A-9725668 propose de modifier le coprocesseur pour permettre de réaliser avec celui-ci, et donc sans utiliser un processeur, des divisions entières.

La présente demande concerne une amélioration du procédé de division décrit dans la demande ci-dessus référencée, de sorte à réduire le temps de calcul nécessaire pour réaliser une division entière.

Le procédé selon l'invention est défini dans la revendication 1. Une variante est spécifiée dans la revendication 2.

Ainsi l'invention concerne un procédé de réalisation d'une division entière, dans un coprocesseur, d'une première donnée M, codée en binaire sur m mots M(m - 1) ... M(1) M(0) de L bits, par une deuxième donnée D, codée en binaire sur d mots D(d - 1) ... D(1) D(0) de L bits, avec m, L et d entiers et d < m, le résultat, noté Q, étant codé sur q mots Q(q - 1) Q(q - 2) ... Q(1) Q(0) de L bits, avec q = m - d + 1 et Q(q - 1) = 00 ... 00 ou 00 ... 01.

Ledit procédé comprend :

- le complément de la donnée M par un mot de poids fort M(m) formé de L zéros,
- la réalisation, m - d + 1 fois, d'une boucle itérative de calcul comprenant :

  - la production d'une première donnée intermédiaire Q(q-1-j) avec j indice variant de 0 à q-1, codée en binaire sur L bits, en mettant en oeuvre la division entière des deux mots de poids les plus forts de la première donnée M par le mot de poids le plus fort de la deuxième donnée D,
  - la production d'une deuxième donnée intermédiaire Z(m-j), codée en binaire sur 2 * L bits, afin de tester si la première donnée intermédiaire Q(q-1-j) est supérieure à une valeur cherchée de l'un des mots du résultat Q ou si elle correspond à une valeur cherchée de l'un de ces mots; et

- dans le premier cas, décrémentation de une unité de la première donnée intermédiaire et répétition de l'étape précédente, ou
- dans le deuxième cas, mise en oeuvre de la multiplication de la deuxième donnée D par la première donnée intermédiaire Q(q-1-j), pour former une troisième donnée intermédiaire B codée en binaire sur d+1 mots de L bits, et production de d nouveau mots de poids fort M(m-j-1) ... M(m-j-d) de la première donnée en mettant en oeuvre une soustraction de la troisième donnée intermédiaire B aux d+1 mots non nuls de poids les plus forts de la première donnée, excepté lors de la première itération où on considère le mot M(m) et les d mots de poids les plus forts de la première donnée M; et si le résultat de la soustraction est négatif : décrémentation de une unité de la première donnée intermédiaire et modification des d nouveaux mots de poids fort produits, par addition de la deuxième donnée à ces dits mots.

Le procédé comprend les étapes suivantes :

E1 - chargement du mot M(m-1) dans un premier registre, le bit de poids fort de ce mot étant en sortie de ce premier registre; chargement de L zéros, correspondants à un mot M(m), dans un deuxième registre ; chargement de L zéros dans un troisième registre; chargement du mot D(d-1) dans un quatrième registre, le bit de poids le plus faible de ce mot étant en sortie de ce quatrième registre;

Répétition q fois des étapes suivantes, avec j indice variant de 0 à q-1 :

E2 - division entière du contenu des deuxième et premier registres par le contenu du quatrième registre, et stockage des L bits de poids faible du résultat, notés Q(q-1-j), dans le premier registre et dans des cinquième et sixième registres;

E3 - chargement du mot D(d-2) dans le deuxième registre, le bit de poids faible de ce mot étant en sortie du deuxième registre; chargement des mots M(m-1-j) et M(m-j) en série dans le troisième registre, les bits poids faibles étant orientés vers la sortie de ce troisième registre; chargement du mot M(m-2-j) dans un septième registre, le bit de poids faible de ce mot étant orienté vers la sortie du septième registre;

E4 - décalage des contenus des deuxième et quatrième registres vers des entrées série d'un premier et d'un deuxième circuits de multiplication et des contenus des troisième et septième registres, avec rebouclage des sorties de ces registres vers leurs entrées; multiplication de D(d-2) par Q(q-1-j) dans le premier circuit de multiplication; multiplication de D(d-1) par Q(q-1-j) dans le deuxième circuit de multiplication; soustraction de M(m-j) M(m-j-1) à D(d-1) * Q(q-1-j) dans un premier circuit de soustraction; soustraction de M(m-2-j) à la donnée produite par le premier circuit de soustraction, dans un deuxième circuit de soustraction, le mot M(m-2-j) ayant été retardé dans une cellule à retard; soustraction de la donnée produite par le deuxième circuit de soustraction à D(d-2) * Q(q-1-j) dans un troisième circuit de soustraction; test du résultat de la dernière soustraction dans un circuit de test;

E5 - si le résultat de la dernière soustraction de l'étape E4 est positif, décalage du contenu du premier registre; soustraction d'une donnée de L bits, formée de un bit de poids faible à un et de L - 1 bit de poids fort à zéro, à la donnée Q(q-1-j) initialement présente dans le premier registre, la soustraction s'effectuant dans un quatrième circuit de soustraction, et stockage de la donnée produite par le quatrième circuit de soustraction dans le premier registre; répétition de l'étape précédente E4;

E6 - si le résultat de la dernière soustraction de l'étape E4 est négatif, chargement des mots M(m-j) ... M(m-d-j) dans le troisième registre et de la donnée D dans le quatrième registre; décalage du contenu des troisième et quatrième registres, avec rebouclage de la sortie du quatrième registre vers son entrée de manière à conserver D(d-1) dans ce registre; multiplication de la donnée D par la donnée Q(q-1-j) dans le deuxième circuit de multiplication; soustraction du résultat produit par le deuxième circuit de multiplication aux bits fournis par le troisième registre, dans le premier circuit de soustraction, et test du résultat; si le résultat fourni par le premier circuit de soustraction est négatif : addition de la donnée D, fournie par le quatrième registre, au résultat produit par le premier circuit de soustraction, dans un circuit d'addition, et soustraction d'une donnée de L bits, formée de un bit de poids faible à un et de L - 1 bit de poids fort à zéro, à la donnée Q(q-1-j) initialement présente dans le premier registre, ladite soustraction s'effectuant dans le quatrième circuit de soustraction, et stockage de la donnée produite par le quatrième circuit de soustraction dans le premier registre; stockage des deux derniers mots du résultat produit par le premier circuit de soustraction ou le cas échéant par le circuit d'addition, noté M(m-1-j) ... M(m-d-j), dans les deuxième et premier registres, les données Q(q-1-j) et M(m-3-j) ... M(m-d-j) étant sorties en dehors du coprocesseur à fin de mémorisation et les données M(m-3-j) ... M(m-d-j) se substituant aux données M(m-3-j) ... M(m-d-j) de poids correspondants dans la donnée M, les bits de poids faible des mots M(m-1-j) et M(m-2-j) étant orientés vers les sorties des deuxième et premier registres; chargement de L zéros dans le troisième registre.

Selon un autre aspect de l'invention, les étapes E1, E3 et E6 sont modifiées de la manière suivante :

E1 - chargement de la donnée M et de L zéros dans un troisième registre; chargement du mot M(m-1) dans un premier registre, le bit de poids fort de ce mot étant en sortie de ce premier registre; chargement de L zéros, correspondants à un mot M(m), dans un deuxième registre; chargement de la donnée D dans un quatrième registre, le bit de poids le plus faible du mot D(d-1) étant en sortie de ce quatrième registre;

E3 - chargement du mot D(d-2) dans le deuxième registre, le bit de poids faible de ce mot étant en sortie du deuxième registre; chargement du mot M(m-2-j) dans un septième registre, le bit de poids faible de ce mot étant orienté vers la sortie de ce registre;

E6 - si le résultat de la dernière soustraction de l'étape E4 est négatif, décalage du contenu des troisième et quatrième registres; multiplication de la donnée D par la donnée Q(q-1-j) dans le deuxième circuit de multiplication; soustraction du résultat produit par le deuxième circuit de multiplication aux bits fournis par le troisième registre, dans le premier circuit de soustraction; si le résultat produit par le premier circuit de soustraction est négatif : addition de la donnée D, fournie par le quatrième registre, au résultat produit par le premier circuit de soustraction, dans le circuit d'addition - et soustraction de d'une donnée de L bits formée de un bit de poids faible à un et de L - 1 bit de poids fort à zéro, à la donnée Q(q-1-j) initialement présente dans le premier registre, la soustraction s'effectuant dans le quatrième circuit de soustraction, et stockage du résultat de cette dernière soustraction dans le premier registre; stockage des deux derniers mots du résultat produit par le premier circuit de soustraction ou le cas échéant par le circuit d'addition, noté M(m-1-j) ... M(m-d-j), dans les troisième, deuxième et premier registres, les données M(m-3-j) ... M(m-d-j) étant mémorisées dans le troisième registre et se substituant aux données M(m-3-j) ... M(m-d-j) de poids correspondants dans la donnée M, les bits de poids faible des mots M(m-1-j) et M(m-2-j) étant orientés vers les sorties des deuxième et premier registres; chargement de L zéros dans le troisième registre.

Selon un mode de réalisation, l'étape E2 comprend les sous-étapes suivantes :

E21 - initialisation à zéro du circuit de test, du troisième et d'un cinquième circuits de soustraction;

E22 - décalage de un bit des troisième et quatrième registres, le troisième registre récupérant en bit de poids fort le bit de poids fort du deuxième registre, le quatrième registre ayant sa sortie reliée à son entrée; soustraction dans le troisième circuit de soustraction du bit de poids fort du deuxième registre avec le bit de poids faible du quatrième registre, le cinquième circuit de soustraction effectuant une soustraction du bit de poids faible du troisième registre avec zéro;

E23 - décalage de 2 * L - 1 bits des troisième et quatrième registres, la sortie du quatrième registre étant reliée à son entrée, l'entrée du troisième registre étant reliée à la sortie du cinquième circuit de soustraction; soustraction des 2 * L - 1 sortant du troisième registre avec zéro dans le cinquième circuit de soustraction; soustraction du résultat sortant du cinquième circuit de soustraction avec les bits du quatrième registre;

E24 - mémorisation de la dernière retenue du troisième circuit de soustraction dans le circuit de test et production à la sortie de ce circuit de test d'une donnée binaire valant le complément de la retenue mémorisée;

E25 - décalage de un bit des premier et deuxième registres, le bit de poids fort du premier registre étant chargé en bit de poids faible du deuxième registre, la donnée binaire mémorisée dans le circuit de test étant chargée en bit de poids faible dans le premier registre;

E26 - initialisation des troisième et cinquième circuits de soustraction;

E27 - répétition 2 * L - 1 fois des étapes E2 à E6, le cinquième circuit de soustraction effectuant une soustraction du contenu du troisième registre avec zéro si la retenue précédemment mémorisée est égale à un ou le cinquième circuit de soustraction effectuant une soustraction du contenu du troisième registre avec le contenu du quatrième registre si la retenue précédemment mémorisée est égale à zéro.

D'autres avantages et particularités apparaîtront à la lecture de la description qui suit d'un exemple de réalisation de l'invention, à lire conjointement aux dessins annexés dans lesquels :

-   la figure 1 représente un coprocesseur d'arithmétique modulaire de l'état de l'art,
-   la figure 2 représente un circuit de division selon l'état de l'art,
-   la figure 3 représente un coprocesseur d'arithmétique modulaire modifié pour réaliser un circuit de division, selon l'état de l'art,
-   la figure 4 représente le coprocesseur de la figure 3, modifié de sorte à pouvoir mettre en oeuvre l'invention,
-   la figure 5 représente un premier exemple de réalisation d'un registre de taille variable, et
-   la figure 6 représente un deuxième exemple de réalisation d'un registre de taille variable.

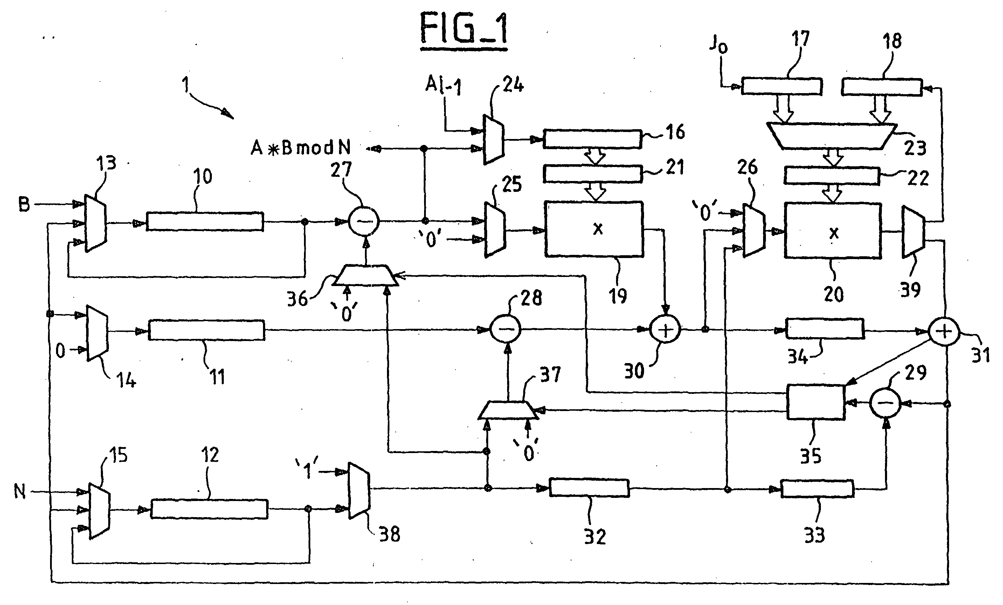

La figure 1 représente un coprocesseur d'arithmétique modulaire. Ladite figure correspond à la figure 1 de la demande WO-A-9725668 et est décrite page 6 - ligne 1 à page 7 - ligne 7 de la demande WO-A-9725668.

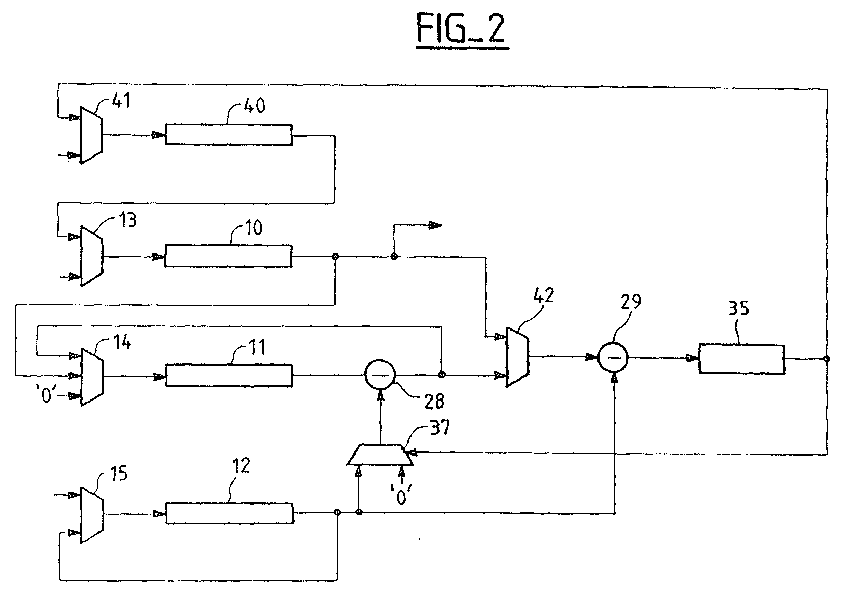

La figure 2 représente schématiquement un circuit de division, réalisé à partir d'éléments du coprocesseur illustré sur la figure 1. Ladite figure 2 correspond à la figure 2 de la demande WO-A-9725668 et est décrite page 7 - ligne 8 à page 9 - ligne 13 de la demande WO-A-9725668.

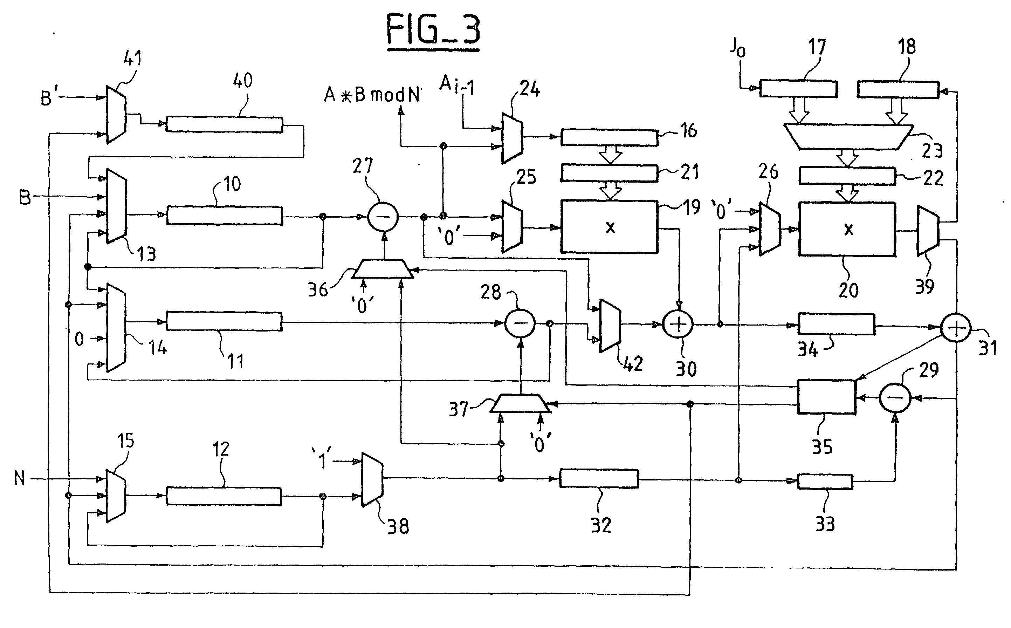

La figure 3 représente schématiquement le coprocesseur de la figure 1 complété d'éléments permettant de mettre en oeuvre une division entière. Cette figure 3 correspond à la figure 3 de la demande WO-A-9725668 et est décrite page 13 - ligne 24 à page 15 - ligne 9 dans la demande WO-A-9725668. Principalement, le circuit illustré sur la figure 3 comprend, en complément des éléments du circuit de la figure 1, un registre 40 et des multiplexeurs 41 et 42 supplémentaires.

La demande WO-A-9725668 décrit un procédé de calcul de division entière mettant en oeuvre le circuit de la figure 2, ledit procédé étant décrit page 9 - ligne 14 à page 11 - ligne 5 de la demande WO-A-9725668.

Supposons que l'on souhaite réaliser la division entière d'un nombre M, codé sur m bits (avec m un entier), par un nombre D, codé sur d bits, le résultat Q étant codé sur q = m - d + 1 bits.

Le procédé décrit pour mettre en oeuvre l'algorithme ci-dessus, avec d = n, n nombre entier, m = 2 * n et q = n, est le suivant :

**Etape 1:**

-   chargement de la donnée M dans les registres 40 et 10 de n bits, le registre 40 contenant les n bits de poids faible de M et le registre 10 contenant les n bits de poids fort de M, chacun de ces registres 40 et 10 ayant son bit de poids le plus fort vers sa sortie et son bit de poids le plus faible vers son entrée,
-   initialisation du registre 11 de n bits avec des zéros,
-   chargement dans le registre 12 de n bits du nombre D, le bit de poids le plus faible étant vers la sortie et le bit de poids le plus fort étant vers l'entrée,
-   initialisation du circuit de test 35, ceci afin d'effectuer la connexion de la deuxième entrée du circuit de soustraction 28 avec un zéro logique,
-   initialisation à zéro des circuits de soustraction 28 et 29,

**Etape 2:**

- décalage de un bit des registres 11 et 12, le registre 11 récupérant en bit de poids fort le bit de poids fort du registre 10, le registre 12 ayant sa sortie reliée à son entrée,
- soustraction dans le circuit de soustraction 29 du bit de poids fort du registre 10 avec le registre de poids faible du registre 12, et soustraction dans le circuit de soustraction 28 du bit de poids faible du registre II avec zéro,

**Etape 3 :**

- décalage de (n - 1) bits des registres 11 et 12, la sortie du registre 12 étant reliée à son entrée et l'entrée du registre 11 étant reliée à la sortie du circuit de soustraction 28,
- soustraction des (n - 1) bits sortant du registre 11 avec zéro dans le circuit de soustraction 28,
- soustraction, dans le circuit de soustraction 29, des bits résultants sortant du circuit de soustraction 28 avec les bits sortant du registre 12,

**Etape 4 :**

- mémorisation d'une donnée binaire valant le complément de la dernière retenue du circuit de soustraction 29 dans le circuit de test 35 et production à la sortie de ce circuit de test 35 de la donnée binaire,

**Etape 5 :**

- décalage de un bit des registres 40 et 10, le bit de poids fort du registre 40 étant chargé en bit de poids faible du registre 10, la donnée binaire mémorisée dans le circuit de test 35 étant chargée en bit de poids faible dans le registre 40,

**Etape 6 :**

- initialisation des circuits de soustraction 28 et 29,

**Etape 7 :**

- répétition (2 * n - 1) fois des étapes 2 à 6, le circuit de soustraction 28 effectuant une soustraction du contenu du registre il avec :

- zéro si la donnée binaire mémorisée est égale à zéro,
- le contenu du registre 12 si cette donnée est égale à un.

Le résultat Q est stocké dans les registres 40 et 10. On pourra dès lors l'extraire par un décalage de 2 * n bits du contenu des registres 40 et 10, la sortie du registre 40 étant reliée à l'entrée du registre 10, le bit de poids fort du résultat sortant en premier. Le reste de la division est présent dans le registre 11.

Le procédé mis en oeuvre est susceptible de diverses modifications, décrites page 11 - ligne 6 à page 13 - ligne 23 de la demande WO-A-9725668.

Ledit procédé permet de réaliser la division en $2n^2 + 9n$ cycles d'horloge, tel qu'indiqué en page 12 - ligne 29 de la demande WO-A-9725668.

Il est également décrit, dans le document "The art of computer programming, Vol. 2, Seminumerical algorithms" ISBN 0-201-03822-6, ci-après D2, une autre méthode de réalisation d'une division entière pour des nombres décrits en base b, b étant un nombre entier supérieur à 2.

L'inventeur a cherché à modifier le procédé décrit ci-dessus, de sorte à réduire le temps de calcul. Pour ce faire, il propose d'opérer différemment, en calculant des sous - ensembles de bits du résultat Q. On supprime ainsi la recherche des bits du résultat Q par une division bit par bit, cette recherche induisant un temps de calcul proportionnel à $n^2$ , tel que mentionné ci-dessus.

Dans le procédé de l'invention, on va produire le résultat Q par paquets de L bits, avec L un entier supérieur à 1. Plus précisément, on procède dans un premier temps à une estimation des paquets de L bits du résultat Q, estimation que l'on réajuste si nécessaire. Puis, on réalise une multiplication du diviseur par les paquets de L bits du résultat et on effectue une comparaison et une soustraction.

On supposera que les opérandes M et D sont codées sur m * L et d * L bits, avec m, d et L entiers (le cas échéant, on pourra compléter les données M et D avec des zéros logiques pour satisfaire à cette condition). On obtient un résultat Q codé sur $(m - d) * L + 1$ bits.

Soit :

$M = M_{mL-1} M_{mL-2} ... M_1 M_0 = M(m-1) M(m-2) ... M(1) M(0)$, avec M(0),..., M(m-1) des sous - données de L bits,

$D = D_{dL-1} D_{dL-2} ... D_1 D_0 = D(d-1) D(d-2) ... D(1) D(0)$, avec D(0), ..., D(d - 1) des sous - données de L bits, et

$Q = M/D = Q_{(m-d)L} ... Q_1 Q_0 = Q(q - 1) Q(q - 2) ...Q(1) Q(0)$, avec Q(0), ..., Q(q - 1) des sous-données de L bits, q = m - d + 1 et Q(q - 1) = 00 ...00 ou 00... 01.

Pour calculer le résultat Q, on implémente l'algorithme suivant :

M'(m) = M(m), M(m) étant formé de L zéros,

Pour j variant de 0 à (q - 1) :

Etape 1 : $X(m-j) = M'(m-j) * 2^L + M(m-j-1)$, avec X(j) codé sur 2 * L bits,

Etape 2 : $Q(q-1-j) = X(m-j) / D(d-1)$, avec Q(q-1-j) codé sur L bits,

Etape 3 : $Z(m-j) = [Q(q-1-j) * D(d-2)] - [X(m-j) - Q(q-1-j) * D(d-1) + M(m-2-j)]$, Z(m-j) étant codé sur 2 * L bits,

Si Z(m-j) > 0 alors

Q(q-1-j) = Q(q-1-j) - 00 ... 01 et calcul à nouveau de Z(m-j)

Sinon

M(m-j-1) ... M(m-j-d) = A - B, A et B étant codés sur (d + 1) * L bits, avec

A = M'(m-j) M(m-j-1) ... M(m-j-d)

B = Q(q-1-j)*D

Si A - B < 0, alors

Q(q-1-j) = Q(q-1-j) - 00 ... 01

M(m-j-1) ... M(m-j-d) = M(m-j-1) ... M(m-j-d) + D j=j+1.

Le résultat de la division entière est obtenu en effectuant :

- le complément de la première donnée M par un mot de poids fort M(m) formé de L zéros,
- la réalisation, m - d + 1 fois, d'un boucle itérative de calcul (indicée
  par j, avec j variant de 0 à (q - 1)) comprenant :

  - la production d'une première donnée intermédiaire Q(q-1-j) avec j indice variant de 0 à q-1, codée en binaire sur L bits, en mettant en oeuvre la division entière des deux mots de poids les plus forts de la première donnée par le mot de poids le plus fort de la deuxième donnée D,
  - la production d'une deuxième donnée intermédiaire Z(m-j), codée en binaire sur 2 * L bits, afin de tester si la première donnée intermédiaire Q(q-1-j) est supérieure à une valeur cherchée de l'un des mots du résultat Q ou si elle correspond à une valeur cherchée de l'un de ces mots; et

    - dans le premier cas, décrémentation de une unité de la première donnée intermédiaire Q(q-1-j) et répétition de l'étape précédente, ou
    - dans le deuxième cas, mise en oeuvre de la multiplication de la deuxième donnée D par la première donnée intermédiaire Q(q-1-j), pour former une troisième donnée intermédiaire B codée en binaire sur d+1 mots de L bits, et production de d nouveau mots de poids fort M(m-j-1) ... M(m-j-d) de la première donnée en mettant en oeuvre une soustraction de la troisième donnée intermédiaire B aux d+1 mots non nuls de poids les plus forts de la première donnée, excepté lors de la première itération où on considère le mot M(m) et les d mots de poids les plus forts de la première donnée M; si le résultat de la dernière soustraction est négatif : décrémentation de une unité de la première donnée intermédiaire Q(q-1-j) et modification des d nouveaux mots de poids fort produits M(m-j-1) ... M(m-j-d), par addition de la deuxième donnée D à ces dits d mots produits.

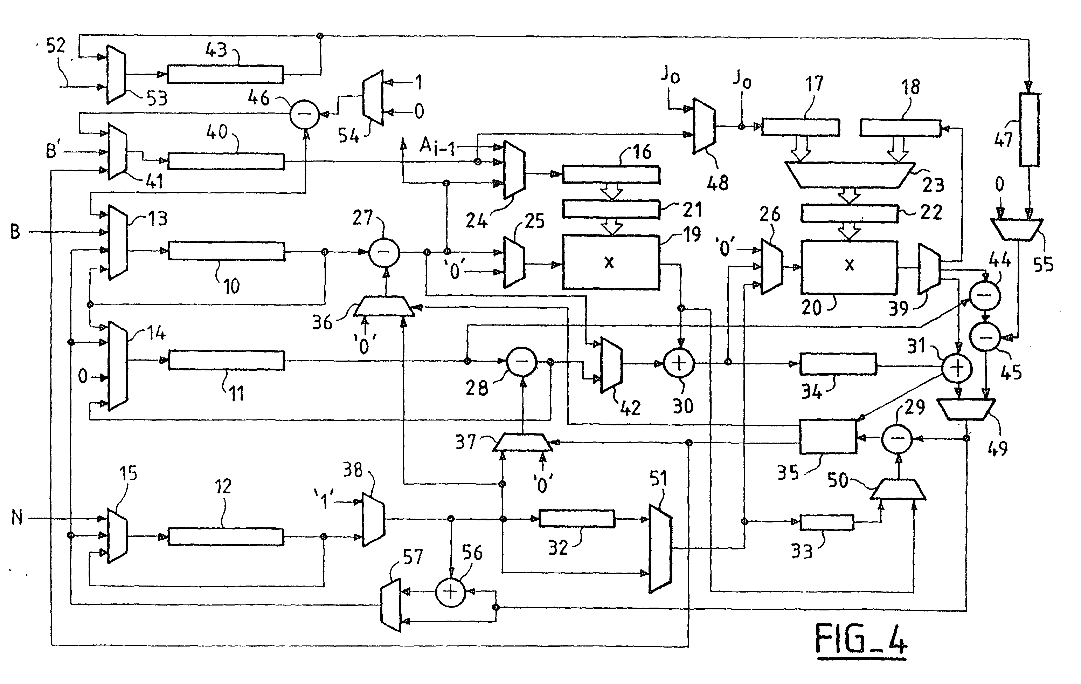

Pour mettre en oeuvre le procédé ci-dessus, on va utiliser le circuit illustré à la figure 4, en supposant que l'on dispose de registres 10, 11, 12 et 40 de tailles variables, ce qui permet de stocker des données binaires de tailles différentes dans un même registre.

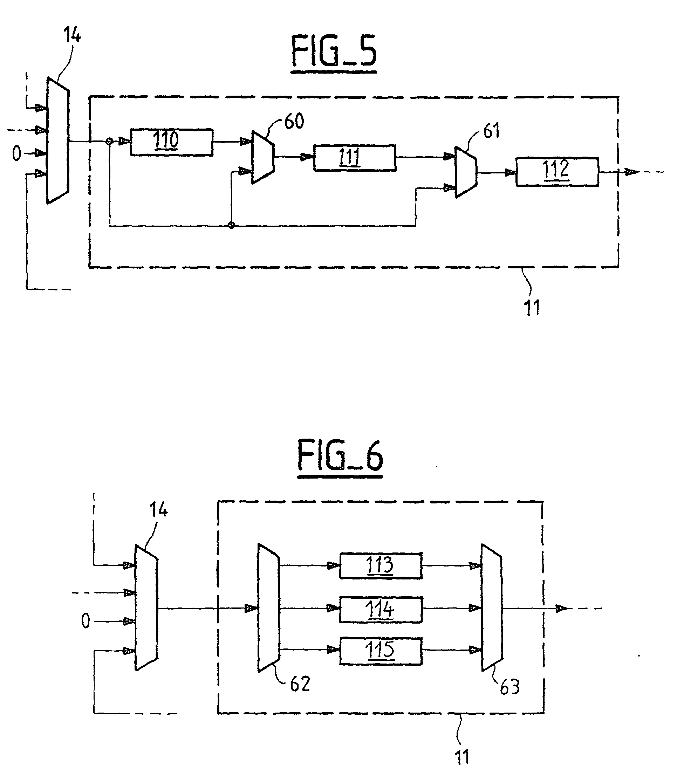

La figure 5 représente un premier exemple de réalisation de registre de taille variable. A titre d'exemple, on considère le registre 11. Selon le mode de réalisation de la figure 5, le registre 11 est formé de sous-registres 110, 111 et 112 disposés en série. La sortie du multiplexeur 14 est reliée à l'entrée du sous-registre 110 et à des premières entrées de multiplexeurs 60 et 61. Ces multiplexeurs 60 et 61 ont des deuxièmes entrées, reliées respectivement aux sorties des sous-registres 110 et 111, et des sorties reliées respectivement aux entrées des sous-registres 111 et 112. Ainsi, la taille du registre il pourra varier selon la commande de sélection des multiplexeurs 60 et 61.

La figure 6 représente un deuxième exemple de réalisation de registre de taille variable. A titre d'exemple, on considère le registre 11. Selon le mode de réalisation de la figure 6, le registre 11 est formé de sous-registres 113, 114 et 115 disposés en parallèle. La sortie du multiplexeur 14 est reliée à l'entrée d'un démultiplexeur 62. Ce démultiplexeur comprend trois sorties reliées aux entrées des sous-registres. Les sorties des sous-registres sont reliées à des trois entrées d'un multiplexeur 63, dont une sortie forme la sortie du registre 11. La taille du registre 11 pourra varier selon la commande de sélection du démultiplexeur et du multiplexeur.

On remarquera que, dans les exemples décrits sur les figures 5 et 6, si on utilise lors d'un calcul un nombre sous-registres inférieur au nombre maximal de sous-registres, on pourra utiliser les sous-registres non utilisés pour stocker des données pouvant par exemple être utilisées dans un calcul ultérieur.

Outre les différents éléments de la figure 3 de la présente demande, le circuit illustré sur la figure 4 comprend un registre 43 de L bits à entrée et sortie série, trois circuits de soustraction 44, 45 et 46 comprenant deux entrées et une sortie de type série, une cellule à retard 47 de taille L ayant une entrée et une sortie série, huit multiplexeurs 48, 49, 50, 51, 53, 54, 55 et 57 comprenant deux entrées et une sortie, et un circuit d'addition 56 comprenant deux entrées série et une sortie série.

Une première entrée du multiplexeur 53 est reliée à une entrée supplémentaire 52 du circuit, et sa sortie est reliée à l'entrée du registre 43. La deuxième entrée du multiplexeur 53 est reliée à la sortie du registre 43, ce qui permet de relier l'entrée de ce registre à sa sortie. La sortie du registre 43 est reliée à l'entrée de la cellule à retard 47.

Le multiplexeur 24 est modifié et comprend trois entrées au lieu de deux. Sa troisième entrée est reliée à la sortie du registre 40. De la sorte, il est possible de charger, dans le registre 16, des bits provenant du registre 40.

La sortie du registre 40 est par ailleurs reliée à une des entrées du multiplexeur 48. L'autre entrée de ce multiplexeur 48 est reliée à une entrée du circuit apte à recevoir une donnée binaire J0, et sa sortie est reliée à l'entrée série du registre 17. On peut ainsi charger dans le registre 17 des bits fournis par la sortie du registre 40.

Une première entrée du circuit de soustraction 44 est reliée à la sortie du circuit de multiplication 20 par le biais d'une troisième sortie du démultiplexeur 39. La deuxième entrée du circuit 44 est reliée à la sortie du registre 11.

Une première entrée du circuit de soustraction 45 est reliée à la sortie du circuit de soustraction 44. Sa deuxième entrée est reliée à la sortie du multiplexeur 55. La première entrée de ce multiplexeur 55 est reliée à la sortie de la cellule à retard 47, et sa deuxième entrée reçoit un zéro logique.

Une première entrée du multiplexeur 49 est reliée à la sortie du circuit de soustraction 45. Sa deuxième entrée est reliée à la sortie du circuit d'addition 31, et sa sortie est reliée à la première entrée du circuit de soustraction 29 et à une première entrée du circuit d'addition 56. La deuxième entrée du circuit d'addition 56 est reliée à la sortie du multiplexeur 38. On peut ainsi fournir le contenu du registre 12 à la deuxième entrée du circuit d'addition 56. La sortie du circuit d'addition 56 est reliée à une première entrée du multiplexeur 57. La deuxième entrée de ce multiplexeur est reliée à la sortie du multiplexeur 49, et sa sortie est reliée aux entrées des registres 10, 11 et 12, par le biais des multiplexeurs 13, 14 et 15. On pourra ainsi fournir aux registres 10, 11 et/ou 12 soit des données fournies par le multiplexeur 49, soit des données obtenues par addition du contenu du registre 12 aux données fournies par le multiplexeur 49.

Une première entrée du multiplexeur 50 est reliée à la sortie du circuit de multiplication 19. Sa deuxième entrée est reliée à la sortie de la cellule à retard 33, et sa sortie est reliée à la deuxième entrée du circuit de soustraction 29.

Une première entrée du multiplexeur 51 est reliée à la sortie du multiplexeur 38. Sa deuxième entrée est reliée à la sortie de la cellule à retard 32, et sa sortie est reliée au multiplexeur 26 et à la cellule 33 (en lieu et place de la sortie de la cellule 32, comme c'est le cas pour les circuits des figures 1 et 3). Le multiplexeur 51 permet de fournir le contenu du registre 12 à l'entrée série du circuit de multiplication 20 en évitant de retarder ce contenu dans la cellule 32.

Une première entrée du circuit de soustraction 46 est reliée à la sortie du registre 40. Sa deuxième entrée est reliée à la sortie du multiplexeur 54, celui-ci recevant sur ses entrées un 1 et un 0 logiques. Le multiplexeur 41 comprend une troisième entrée, reliée à la sortie du circuit de soustraction 46, de sorte que l'on peut relier la sortie de ce registre à son entrée.

On notera que l'on pourrait modifier différemment le circuit de la figure 3 pour mettre en oeuvre le procédé de l'invention, l'exemple donné n'étant fourni qu'à titre indicatif. On remarquera néanmoins que la disposition des nouveaux éléments, tels qu'il est décrit, permet de mettre en oeuvre toutes les opérations pouvant être précédemment réalisées par le circuit de la figure 3. Pour cela, il suffira de sélectionner de manière adéquate les entrées et sorties des multiplexeurs et du démultiplexeur. On ne détaillera pas plus avant cette particularité, celle-ci ne pouvant qu'apparaître clairement à l'homme du métier.

Le procédé de l'invention réalise une division entière, dans un coprocesseur, d'une première donnée M, codée en binaire sur m mots M(m - 1) ... M(1) M(0) de L bits, par une deuxième donnée D, codée en binaire sur d mots D(d - 1) ... D(1) D(0) de L bits, avec m, L et d entiers et d < m, le résultat, noté Q, étant codé sur q mots Q(q - 1) Q(q - 2) ... Q(1) Q(0) de L bits, avec q = m - d + 1 et Q(q - 1) = 00 ... 00 ou 00 ... 01. Un exemple de mise en oeuvre du procédé de l'invention comprend les étapes E1 à E6 suivantes :

E1 - chargement du mot M(m-1) dans un premier registre (40), le bit de poids fort de ce mot étant en sortie de ce premier registre (40); chargement de L zéros, correspondants à un mot M(m), dans un deuxième registre (10); chargement de L zéros dans un troisième registre (11); chargement du mot D(d-1) dans un quatrième registre (12), le bit de poids le plus faible de ce mot étant en sortie de ce quatrième registre (12); et

Répétition q fois des étapes E2 à E6 suivantes, avec j un indice variant de 0 à q-1 :

E2 - division entière des deux mots de poids les plus forts de la première donnée M, contenus dans les deuxième et premier registres (10, 40), par le mot de poids le plus fort de la deuxième donnée D, contenu du quatrième registre (12), et stockage des L bits de poids faible du résultat de la division entière, correspondant à une première donnée intermédiaire Q(q-1-j), dans le premier registre 40 et dans des cinquième et sixième registres (16, 17);

E3 - chargement du mot D(d-2) dans un deuxième registre (10), le bit de poids faible de ce mot étant en sortie du deuxième registre (10); et chargement des mots M(m-1-j) et M(m-j) en série dans le troisième registre (11), les bits poids faibles étant orientés vers la sortie de ce troisième registre; chargement du mot M(m-2-j) dans un septième registre (43), le bit de poids faible de ce mot étant orienté vers la sortie du septième registre;

E4 - * décalage des contenus des deuxième et quatrième registres (10, 12) vers des entrées série d'un premier et d'un deuxième circuits de multiplication (19, 20) et des contenus des troisième et septième registres (11, 43), avec rebouclage des sorties de ces registres vers leurs entrées;

* multiplication de D(d-2) par Q(q-1-j) dans le premier circuit de multiplication (19);

* multiplication de D(d-1) par Q(q-1-j) dans le deuxième circuit de multiplication (20);

* soustraction de M(m-j) M(m-j-1) à D(d-1) * Q(q-1-j) dans un premier circuit de soustraction (44);

* soustraction de M(m-2-j) à la donnée produite par le premier circuit de soustraction (44), dans un deuxième circuit de soustraction (45), le mot M(m-2-j) ayant été retardé dans une cellule à retard (47);

* soustraction de la donnée produite par le deuxième circuit de soustraction (45) à D(d-2) * Q(q-1-j) dans un troisième circuit de soustraction (29), le résultat de la soustraction étant une deuxième donnée intermédiaire Z(m-j) binaire codée sur 2*L bits; et

* test de la deuxième donnée intermédiaire Z(m-j), résultat de la dernière soustraction, dans un circuit de test (35), pour savoir si la première donnée intermédiaire Q(q-1-j) est supérieure à une valeur cherchée de l'un des mots du résultat Q ou si elle correspond à une valeur recherchée de l'un de ces mots;

E5 - si le résultat de la dernière soustraction de l'étape E4 est positif :

* décrémentation d'une unité de la première donnée intermédiaire Q(q-1-j) par décalage du contenu du premier registre (40); soustraction d'une donnée de L bits, formée de un bit de poids faible à un et de L - 1 bit de poids fort à zéro, à la première donnée intermédiaire Q(q-1-j) initialement présente dans le premier registre (40), la soustraction s'effectuant dans un quatrième circuit de soustraction (46); et stockage de la donnée produite par le quatrième circuit de soustraction (46) dans le premier registre (40); et

* répétition de l'étape précédente E4;

E6 - si le résultat de la dernière soustraction de l'étape E4 est négatif :

* chargement des mots M(m-j) ... M(m-d-j) dans le troisième registre (11) et de la donnée D dans le quatrième registre (12);

* décalage du contenu des troisième et quatrième registres (11, 12), avec rebouclage de la sortie du quatrième registre (12) vers son entrée de manière à conserver D(d-1) dans ce registre;

* multiplication de la donnée D par la donnée Q(q-1-j) dans le deuxième circuit de multiplication (20) pour obtenir une troisième donnée intermédiaire B codée sur d-1 mots de L bits;

* soustraction, dans le premier circuit de soustraction (44), de la troisième donnée intermédiaire B produite par le deuxième circuit de multiplication (20) aux d+1 mots de poids les plus forts de la première donnée M fournis par le troisième registre (11), , excepté lors de la première itération où on considère le mot M(m) et les d mots de poids les plus forts de la première donnée M ; et test du résultat de la soustraction;

* si le résultat fourni par le premier circuit de soustraction (44) est négatif :

  - addition de la donnée D, fournie par le quatrième registre (12), au résultat produit par le premier circuit de soustraction (44), dans un circuit d'addition (56),

  - soustraction d'une donnée de L bits, formée de un bit de poids faible à un et de L - 1 bit de poids fort à zéro, à la donnée Q(q-1-j) initialement présente dans le premier registre (40), ladite soustraction s'effectuant dans le quatrième circuit de soustraction (46), et

  - stockage de la donnée produite par le quatrième circuit de soustraction (46) dans le premier registre (40);

* production de d nouveaux mots de poids forts M(m-1-j) ... M(m-d-j) de la première donnée M qui sont le résultat produit par le premier circuit de soustraction (44) ou le cas échéant par le circuit d'addition (56);

* stockage des deux derniers nouveaux mots de poids fort M(m-1-j)M(m-2-j) de M dans les deuxième et premier registres (10, 40) , les bits de poids faible des mots M(m-1-j) et M(m-2-j) étant orientés vers les sorties des deuxième et premier registres (10, 40), les données Q(q-1-j) et M(m-3-j) ... M(m-d-j) étant sorties en dehors du coprocesseur à fin de mémorisation;

* chargement de L zéros dans le troisième registre (11).

Concernant l'étape E2, on pourra procéder de la manière suivante, analogue au procédé décrit dans la demande WO 97/25668, en considérant la division entière d'une donnée de 2 * L bits par une donnée de L bits :

E21 - initialisation à zéro du circuit de test 35 et des circuits de soustraction 28 et 29;

E22 - décalage de un bit des registres 11 et 12, le registre 11 récupérant en bit de poids fort le bit de poids fort du registre 10 par le biais du multiplexeur 14, le registre 12 ayant sa sortie reliée à son entrée par le biais du multiplexeur 15; soustraction dans le circuit de soustraction 29 du bit de poids fort du registre 10 avec le bit de poids faible du registre 12, le circuit de soustraction 28 effectuant une soustraction du bit de poids faible du registre 11 avec zéro;

E23 - décalage de 2 * L - 1 bits des registres Il et 12, la sortie du registre 12 étant reliée à son entrée par le biais du multiplexeur 15, l'entrée du troisième registre 11 étant reliée à la sortie du circuit de soustraction 28 par le biais du multiplexeur 14; soustraction des 2 * L - 1 bits sortant du registre 11 avec zéro dans le circuit de soustraction 28; soustraction du résultat sortant du circuit de soustraction 28 avec les bits du registre 12;

E24 - mémorisation de la dernière retenue du circuit de soustraction 29 dans le circuit de test 35 et production à la sortie de ce circuit de test d'une donnée binaire valant le complément de la retenue mémorisée;

E25 - décalage de un bit des registres 40 et 10, le bit de poids fort du registre 40 étant chargé en bit de poids faible du registre 10, la donnée binaire mémorisée dans le circuit de test 35 étant chargée en bit de poids faible dans le registre 40;

E26 - initialisation des circuits de soustraction 28 et 29;

E27 - répétition 2 * L - 1 fois des étapes E2 à E6, le circuit de soustraction 28 effectuant une soustraction du contenu du registre 11 avec zéro si la retenue précédemment mémorisée est égale à un ou le circuit de soustraction 28 effectuant une soustraction du contenu du registre 11 avec le contenu du registre 12 si la retenue précédemment mémorisée est égale à zéro.

**Gain en temps de calcul :**

On supposera par exemple que l'on a M sur 2 * n bits et D sur n bits, avec n = 512 et que l'on subdivise les données en mots de L = 32 bits. On a alors m = 32 et d = 16, d'où q = 17.

Selon la technique antérieure, on obtient le ré-sultat en 2 * $n^2$ + 9 * n cycles d'horloge, c'est-à-dire en 528 896 cycles d'horloge.

Avec le nouveau procédé, le nombre de cycles d'horloge nécessaires peut s'approximer de la manière suivante, en considérant que

- l'on charge en parallèle les registres lorsque cela est possible,
- l'on ne doive pas effectuer de calcul redondant suite à l'étape E4, et
- l'on néglige les quelques cycles d'horloge isolés nécessaires aux initialisations des différents circuits de calcul :

- l'étape E1 nécessite L cycles d'horloge,
- l'étape E2 nécessite (m - d + 1) * (2 * $L^2$ + 6 * L) cycles d'horloge,
- l'étape E3 nécessite (m - d + 1) * (2 * L + 1) cycles d'horloge,
- l'étape E4 nécessite (m - d +1) * (2 * L) cycles d'horloge,
- l'étape E6 nécessite (m - d +1) * (2 * (d +1) * L + L) cycles d'horloge.

Cela nous amène à la formule suivante à un total approximatif de :

$$(m - d + 1) * (2 * L^2 + 13 * L + 2 * d * L + 1) + L.$$

Dans l'exemple illustré, le nombre de cycles d'horloge nécessaires sera donc, approximativement, de 59 345, c'est-à-dire neuf fois moindre qu'avec le procédé antérieur.

On remarquera que la répétition éventuelle de l'étape E4 suite à l'étape E5, négligée ci-dessus, n'augmentera pas de manière importante le temps de calcul. Si l'on suppose par exemple que l'on doit systématiquement répéter l'étape E4, le nombre de cycles d'horloge supplémentaires sera approximativement de 1650, ce qui est faible comparé au gain apporté par l'invention par rapport au procédé selon l'état de l'art.

Par ailleurs, on remarquera que l'on peut modifier le procédé décrit de sorte à diminuer le nombre d'échanges nécessaires avec l'extérieur du coprocesseur, en utilisant des registres de taille variable tels qu'illustrés par exemple sur les figures 5 et 6. En effet, une caractéristique que l'on cherche généralement dans un coprocesseur est de pouvoir opérer des opérations à un fréquence de fonctionnement bien supérieure à celle des éléments auxquels il est associé (processeur, mémoire ...). Bien entendu, si le coprocesseur doit effectuer des échanges de données avec les éléments auxquels il est associé, il doit le faire à une fréquence compatible avec la fréquence de fonctionnement desdits éléments, c'est-à-dire à une fréquence inférieure. On a donc intérêt à minimiser le nombre d'échanges entre le coprocesseur et son environnement.

En utilisant des registres de taille variable, formés de sous-registres dont une partie peut être utilisée pour stocker des données devant être utilisées, on pourra diminuer le nombre d'échanges nécessaires en modifiant tel qu'indiqué ci-dessous certaines des étapes du procédé selon l'invention :

E1 - chargement de la donnée M et de L zéros dans le registre 11 par le biais du multiplexeur 14; chargement du mot M(m-1) dans le registre 40 par le biais du multiplexeur 41, le bit de poids fort de ce mot étant en sortie de ce registre 40; chargement de L zéros, correspondants à un mot M(m), dans le registre 10 par le biais du multiplexeur 13; chargement de la donnée D dans le registre 12 par le biais du multiplexeur 15, le bit de poids le plus faible du mot D(d-1) étant en sortie de ce registre 12;

E3 - transfert des contenus des registres 16 et 17 respectivement dans les registres 21 et 22 ; chargement du mot D(d-2) dans le registre 10 par le biais du multiplexeur 13, le bit de poids faible de ce mot étant en sortie du registre 10; chargement du mot M(m-2-j) dans le registre 43, le bit de poids faible de ce mot étant orienté vers la sortie;

E6 - si le résultat de la dernière soustraction de l'étape E4 est négatif, décalage du contenu des registres 11 et 12; multiplication de la donnée D par la donnée Q(q-1-j) dans le circuit de multiplication 20; soustraction du résultat produit par le circuit de multiplication 20 aux bits fournis par le registre 11, dans le circuit de soustraction 44; stockage des deux derniers mots du résulta produit par le circuit de soustraction 44, noté M(m-1-j) ... M(m-d-j), dans les registres 11, 10 et 40 (on sélectionne alors la deuxième entrée du multiplexeur 55 de sorte que le circuit de soustraction 45 soit transparent), les données M(m-3-j) ... M(m-d-j) étant mémorisées dans le registre II et se substituant aux données M(m-3-j) ... M(m-d-j) de poids correspondants dans la donnée M, les bits de poids faible des mots M(m-1-j) et M(m-2-j) étant orientés vers les sorties des registres 10 et 40; si le résultat produit par le circuit de soustraction 44 est négatif : addition de la donnée D, fournie par le registre 12, au résultat produit par le circuit de soustraction 44, dans le circuit d'addition 56 - et soustraction de d'une donnée de L bits, fournie par le multiplexeur 54 et formée de un bit de poids faible à un et de L - 1 bit de poids fort à zéro, à la donnée Q(q-1-j) initialement présente dans le registre 40, la soustraction s'effectuant dans le circuit de soustraction 46, et stockage du résultat dans le registre 40; chargement de L zéros dans le registre 11.

Bien entendu, on procédera aux modifications nécessaires dans le coprocesseur. Ainsi, on prévoira des connexions supplémentaires entre les sorties des registres 11 et 12 et les multiplexeurs permettant d'accéder aux registres 10, 40 et 43, afin de permettre un transfert des données contenues dans les registres 11 et 12 vers ces autres registres. Pour ce faire, on pourra prévoir des connexions dédiées, et utiliser en conséquences des multiplexeurs ayant une entrée supplémentaire, ou bien profiter des connexions existantes qui proviennent du multiplexeur 49 et/ou du circuit de test 35.

**Revendications**

**1.** Procédé de réalisation d'une division entière, dans un coprocesseur, d'une première donnée M, codée en binaire sur m mots M(m - 1) ... M(1) M(0) de L bits, par une deuxième donnée D, codée en binaire sur d mots D(d - 1) ... D(1) D(0) de L bits, avec m, L et d entiers et d < m, le résultat, noté Q, étant codé sur q mots Q(q - 1) Q(q - 2) ... Q(1) Q(0) de L bits, avec q = m - d + 1 et Q(q - 1) = 00 ... 00 ou 00 ... 01, ledit procédé étant caractérisé en ce qu'il comprend les étapes suivantes :

E1 - chargement du mot M(m-1) dans un premier registre (40), le bit de poids fort de ce mot étant en sortie de ce premier registre (40); chargement de L zéros, correspondants à un mot M(m), dans un deuxième registre (10); chargement de L zéros dans un troisième registre (11); chargement du mot D(d-1) dans un quatrième registre (12), le bit de poids le plus faible de ce mot étant en sortie de ce quatrième registre (12); et

Répétition q fois des étapes E2 à E6 suivantes, avec j un indice variant de 0 à q-1 :

E2- division entière des deux mots de poids les plus forts de la première donnée M, contenus dans les deuxième et premier registres (10, 40), par le mot de poids le plus fort de la deuxième donnée D, contenu du quatrième registre (12), et stockage des L bits de poids faible du résultat de la division entière, correspondant à une première donnée intermédiaire Q(q-1-j), dans le premier registre 40 et dans des cinquième et sixième registres (16, 17);

E3 - chargement du mot D(d-2) dans un deuxième registre (10), le bit de poids faible de ce mot étant en sortie du deuxième registre (10); et chargement des mots M(m-1-j) et M(m-j) en série dans le troisième registre (11), les bits poids faibles étant orientés vers la sortie de ce troisième registre; chargement du mot M(m-2-j) dans un septième registre (43), le bit de poids faible de ce mot étant orienté vers la sortie du septième registre;

E4 - * décalage des contenus des deuxième et quatrième registres (10, 12) vers des entrées série d'un premier et d'un deuxième circuits de multiplication (19, 20) et des contenus des troisième et septième registres (11, 43), avec rebouclage des sorties de ces registres vers leurs entrées;

* multiplication de D(d-2) par Q(q-1-j) dans le premier circuit de multiplication (19);
* multiplication de D(d-1) par Q(q-1-j) dans le deuxième circuit de multiplication (20);
* soustraction de M(m-j) M(m-j-1) à D(d-1) $^*$ Q(q-1-j) dans un premier circuit de soustraction (44);
* soustraction de M(m-2-j) à la donnée produite par le premier circuit de soustraction (44), dans un deuxième circuit de soustraction (45), le mot M(m-2-j) ayant été retardé dans une cellule à retard (47);
* soustraction de la donnée produite par le deuxième circuit de soustraction (45) à D (d-2) $^*$ Q(q-1-j) dans un troisième circuit de soustraction (29), le résultat de la soustraction étant une deuxième donnée intermédiaire Z(m-j) binaire codée sur 2*L bits; et
* test de la deuxième donnée intermédiaire Z(m-j), résultat de la dernière soustraction, dans un circuit de test (35), pour savoir si la première donnée intermédiaire Q(q-1-j) est supérieure à une valeur cherchée de l'un des mots du résultat Q ou si elle correspond à une valeur recherchée de l'un des ces mots;

E5 - si le résultat de la dernière soustraction de l'étape E4 est positif:

* décrémentation de une unité de la première donnée intermédiaire Q(q-1-j) par décalage du contenu du premier registre (40); soustraction d'une donnée de L bits, formée de un bit de poids faible à un et de L - 1 bit de poids fort à zéro, à la première donnée intermédiaire Q(q-1-j) initialement présente dans le premier registre (40), la soustraction s'effectuant dans un quatrième circuit de soustraction (46); et stockage de la donnée produite par le quatrième circuit de soustraction (46) dans le premier registre (40); et
* répétition de l'étape précédente E4;

E6 - si le résultat de la dernière soustraction de l'étape E4 est négatif :

* chargement des mots M(m-j) ... M(m-d-j) dans le troisième registre (11) et de la donnée D dans le quatrième registre (12);
* décalage du contenu des troisième et quatrième registres (11, 12), avec rebouclage de la sortie du quatrième registre (12) vers son entrée de manière à conserver D(d-1) dans ce registre;

* multiplication de la donnée D par la donnée Q(q-1-j) dans le deuxième circuit de multiplication (20) pour obtenir une troisième donnée intermédiaire B codée sur d-1 mots de L bits;
* soustraction, dans le premier circuit de soustraction (44), de la troisième donnée intermédiaire B produite par le deuxième circuit de multiplication (20) aux d+1 mots de poids les plus forts de la première donnée M fournis par le troisième registre (11), , excepté lors de la première itération où on considère le mot M(m) et les d mots de poids les plus forts de la première donnée M ; et test du résultat de la soustraction;
* si le résultat fourni par le premier circuit de soustraction (44) est négatif :

  - addition de la donnée D, fournie par le quatrième registre (12), au résultat produit par le premier circuit de soustraction (44), dans un circuit d'addition (56),
  - soustraction d'une donnée de L bits, formée de un bit de poids faible à un et de L - 1 bit de poids fort à zéro, à la donnée Q(q-1-j) initialement présente dans le premier registre (40), ladite soustraction s'effectuant dans le quatrième circuit de soustraction (46), et
  - stockage de la donnée produite par le quatrième circuit de soustraction (46) dans le premier registre (40);

* production de d nouveaux mots de poids forts M(m-1-j) ... M(m-d-j) de la première donnée M qui sont le résultat produit par le premier circuit de soustraction (44) ou le cas échéant par le circuit d'addition (56);
* stockage des deux derniers nouveaux mots de poids fort M(m-1-j)M(m-2-j) de M dans les deuxième et premier registres (10, 40), les bits de poids faible des mots M(m-1-j) et M(m-2-j) étant orientés vers les sorties des deuxième et premier registres (10, 40), les données Q(q-1-j) et M(m-3-j) ... M(m-d-j) étant sorties en dehors du coprocesseur à fin de mémorisation;
* chargement de L zéros dans le troisième registre (11).

2. Procédé selon la revendication 1, les étapes E1, E3 et E6 étant modifiées de la manière suivante :

  E1 - chargement de la donnée M et de L zéros dans un troisième registre (11); chargement du mot M(m-1) dans un premier registre (40), le bit de poids fort de ce mot étant en sortie de ce premier registre (40); chargement de L zéros, correspondants à un mot M(m), dans un deuxième registre (10); chargement de la donnée D dans un quatrième registre (12), le bit de poids le plus faible du mot D(d-1) étant en sortie de ce quatrième registre (12);

E3 - chargement du mot D(d-2) dans le deuxième registre (10), le bit de poids faible de ce mot étant en sortie du deuxième registre (10); chargement du mot M(m-2-j) dans un septième registre (43), le bit de poids faible de ce mot étant orienté vers la sortie de ce registre;

E6 - si le résultat de la dernière soustraction de l'étape E4 est négatif :

* décalage du contenu des troisième et quatrième registres (11, 12);
* multiplication de la donnée D par la donnée Q(q-1-j) dans le deuxième circuit de multiplication (20);
* soustraction du résultat produit par le deuxième circuit de multiplication (20) aux bits fournis par le troisième registre (11), dans le premier circuit de soustraction (44);
* si le résultat produit par le premier circuit de soustraction (44) est négatif:

    - addition de la donnée D, fournie par le quatrième registre (12), au résultat produit par le premier circuit de soustraction (44), dans le circuit d'addition (56)
    - soustraction de d'une donnée de L bits formée de un bit de poids faible à un et de L - 1 bit de poids fort à zéro, à la donnée Q(q-1-j) initialement présente dans le premier registre (40), la soustraction s'effectuant dans le quatrième circuit de soustraction (46), et
    - stockage du résultat de cette dernière soustraction dans le premier registre (40);

* stockage des deux derniers mots du résultat produit par le premier circuit de soustraction (44) ou le cas échéant par le circuit d'addition (56), noté M(m-1-j) ... M(m-d-j), dans les troisième, deuxième et premier registres (11, 10, 40), les données M(m-3-j) ... M(m-d-j) étant mémorisées dans le troisième registre (11) et se substituant aux données M(m-3-j) ... M(m-d-j) de poids correspondants dans la donnée M, les bits de poids faible des mots M(m-1-j) et M(m-2-j) étant orientés vers les sorties des deuxième et premier registres (10, 40); et

* chargement de L zéros dans le troisième registre (11).

3. Procédé selon la revendication 1, caractérisé en ce que l'étape E2 comprend les sous-étapes suivantes :

    E21 - initialisation à zéro du circuit de test (35), du troisième et d'un cinquième circuits de soustraction (29, 28);

    E22 - décalage de un bit des troisième et quatrième registres (11, 12), le troisième registre (11) récupérant en bit de poids fort le bit de poids fort du deuxième registre (10), le quatrième registre (12) ayant sa sortie reliée à son entrée; soustraction dans le troisième circuit de soustraction (29) du bit de poids fort du deuxième registre (10) avec le bit de poids faible du quatrième registre (12), le cinquième circuit de soustraction (28) effectuant une soustraction du bit de poids faible du troisième registre (11) avec zéro;

    E23 - décalage de 2 * L - 1 bits des troisième et quatrième registres (11, 12), la sortie du quatrième registre (12) étant reliée à son entrée, l'entrée du troisième registre (11) étant reliée à la sortie du cinquième circuit de soustraction (28); soustraction des 2 * L - 1 bits sortant du troisième registre (11) avec zéro dans le cinquième circuit de soustraction (28); soustraction du résultat sortant du cinquième circuit de soustraction (28) avec les bits du quatrième registre (12);

    E24 - mémorisation de la dernière retenue du troisième circuit de soustraction (29) dans le circuit de test (35) et production à la sortie de ce circuit de test d'une donnée binaire valant le complément de la retenue mémorisée;

    E25 - décalage de un bit des premier et deuxième registres (40, 10), le bit de poids fort du premier registre (40) étant chargé en bit de poids faible du deuxième registre (10), la donnée binaire mémorisée dans le circuit de test (35) étant chargée en bit de poids faible dans le premier registre (40);

    E26 - initialisation des troisième et cinquième circuits de soustraction (29, 28);

    E27 - répétition 2 * L - 1 fois des étapes E2 à E6, le cinquième circuit de soustraction (28) effectuant une soustraction du contenu du troisième registre (11) avec zéro si la retenue précédemment mémorisée est égale à un ou le cinquième circuit de soustraction (28) effectuant une soustraction du contenu du troisième registre (11) avec le contenu du quatrième registre (12) si la retenue précédemment mémorisée est égale à zéro.

**Patentansprüche**

1. Verfahren zur Durchführung, in einem Coprozessor, einer ganzzahligen Division einer ersten Größe M, die in Form von m Wörtern M(m-1) ... M(1) M(0) mit L Bits binär codiert vorliegt, durch eine zweite Größe D, die in Form von d Wörtern D(d-1) ... D(1) D(0) mit L Bits binär codiert vorliegt, wobei m, L und d ganzen Zahlen sind und d<m, wobei das mit Q bezeichnete Ergebnis in Form von q Wörtern Q(q-1) Q(q-2) ... Q(1) Q(0) mit L Bits codiert vorliegt, mit q = m - d + 1 und Q(q-1) = 00 ... 00 oder 00 ... 01, wobei das Verfahren dadurch gekennzeichnet ist, daß es die folgenden Schritte aufweist:

   E1 - Laden des Worts M(m-1) in ein erstes Register (40), wobei das Bit hoher Gewichtung dieses Worts sich am Ausgang dieses ersten Registers (40) befindet; Laden von L Nullen, die einem Wort M(m) entsprechen, in ein zweites Register (10); Laden von L Nullen in ein drittes Register (11); Laden des Worts D(d-1) in ein viertes Register (12), wobei das Bit geringster Gewichtung dieses Worts sich am Ausgang dieses vierten Registers (12) befindet; und
   q-malige Wiederholung der folgenden Schritte E2 bis E6, wobei j ein von 0 bis q-1 variierender Index ist:

   E2 - ganzzahlige Division der beiden Wörter höchster Gewichtungen der ersten Größe M, die im zweiten und im ersten Register (10, 40) enthalten sind, durch das Wort höchster Gewichtung der zweiten Größe D, das Inhalt des vierten Registers (12) ist, und Speicherung der L Bits geringer Gewichtung des Ergebnisses der ganzzahligen Division, entsprechend einer ersten Zwischengröße Q(q-1-j), im ersten Register 40 und in fünften und sechsten Registern (16, 17);

   E3 - Laden des Worts D(d-2) in ein zweites Register (10), wobei das Bit geringer Gewichtung dieses Worts sich am Ausgang des zweiten Registers (10) befindet; und Laden der Wörter M(m-1-j) und M(m-j) in Serie in das dritte Register (11), wobei die Bits geringer Gewichtung zum Ausgang dieses dritten Registers gerichtet sind; Laden des Worts M(m-2-j) in ein siebtes Register (43), wobei das Bit geringer Gewichtung dieses Worts zum Ausgang des siebten Registers gerichtet ist;

   E4 - * Verschiebung der Inhalte des zweiten und des vierten Registers (10, 12) zu Serieneingängen einer ersten und einer zweiten Multiplikationsschaltung (19, 20) und der Inhalte des dritten und des siebten Registers (11, 43), mit Rückschleifen der Ausgänge dieser Register zu ihren Eingängen;

   * Multiplikation von D(d-2)mit Q(q-1-j) in der ersten Multiplikationsschaltung (19);
   * Multiplikation von D(d-1) mit Q(q-1-j) in der zweiten Multiplikationsschaltung (20);
   * Subtraktion von M(m-j) M(m-j-1) von D(d-1) $^*$ Q(q-1-j) in einer ersten Subtraktionsschaltung (44);
   * Subtraktion von M(m-2-j) von der Größe, die von der ersten Subtraktionsschaltung (44) erzeugt wurde, in einer zweiten Subtraktionsschaltung (45), wobei das Wort M(m-2-j) in einer Verzögerungszelle (47) verzögert wurde;
   * Subtraktion der von der zweiten Subtraktionsschaltung (45) erzeugten Größe von D(d-2) * Q(q-1) in einer dritten Subtraktionsschaltung (29), wobei das Ergebnis der Subtraktion eine zweite binäre Zwischengröße Z(m-j) ist, die mit 2 * L Bits codiert vorliegt; und
   * Test der zweiten Zwischengröße Z(m-j), Ergebnis der letzten Subtraktion, in einer Testschaltung (35), um zu erfahren, ob die erste Zwischengröße Q(q-1-j) größer ist als ein gesuchter Wert eines der Wörter des Ergebnisses Q oder ob sie einem gesuchten Wert eines dieser Wörter entspricht;

   E5 - wenn das Ergebnis der letzten Subtraktion des Schritts E4 positiv ist:

   * Dekrementierung der ersten Zwischengröße Q(q-1-j) um eine Einheit durch Verschiebung des Inhalts des ersten Registers (40); Subtraktion einer Größe von L Bits, gebildet aus einem Bit geringer Gewichtung auf Eins und L-1 Bits hoher Gewichtung auf Null, von der ersten Zwischengröße Q(q-1-j), die ursprünglich im ersten Register (40) vorhanden ist, wobei die Subtraktion in einer vierten Subtraktionsschaltung (46) erfolgt; und Speicherung der von der vierten Subtraktionsschaltung (46) erzeugten Größe im ersten Register (40); und

   * Wiederholung des vorhergehenden Schritts E4;

   E6 - wenn das Ergebnis der letzten Subtraktion des Schritts E4 negativ ist:

\* Laden der Wörter M(m-j) ... M(m-d-j) in das dritte Register (11) und der Größe D in das vierte Register (12);

\* Verschiebung des Inhalts des dritten und des vierten Registers (11, 12) mit Rückschleifen des Ausgangs des vierten Registers (12) zu seinem Eingang, um D(d-1) in diesem Register beizubehalten;

\* Multiplikation der Größe D mit der Größe Q(q-1-j) in der zweiten Multiplikationsschaltung (20), um eine dritte Zwischengröße B zu erhalten, die in Form von d-1 Wörtern mit L Bits codiert ist;

\* Subtraktion, in der ersten Subtraktionsschaltung (44), der dritten Zwischengröße B, die von der zweiten Multiplikationsschaltung (20) erzeugt wird, von den d+1 Wörtern höchster Gewichtung der ersten Größe M, die vom dritten Register (11) geliefert werden, außer bei der ersten Iteration, bei der man das Wort M(m) und die d Wörter höchster Gewichtung der ersten Größe M berücksichtigt; und Test des Ergebnisses der Subtraktion;

\* wenn das von der ersten Subtraktionsschaltung (44) gelieferte Ergebnis negativ ist:

- Addition der Größe D, geliefert vom vierten Register (12), zum Ergebnis, das von der ersten Subtraktionsschaltung (44) erzeugt wird, in einer Additionsschaltung (56),
- Subtraktion einer Größe mit L Bits, gebildet aus einem Bit geringer Gewichtung auf Eins und aus L-1 Bits hoher Gewichtung auf Null, von der Größe Q(q-1-j), die ursprünglich im ersten Register (40) vorhanden ist, wobei die Subtraktion in der vierten Subtraktionsschaltung (46) erfolgt, und
- Speicherung der von der vierten Subtraktionsschaltung (46) erzeugten Größe im ersten Register (40);

\* Erzeugung von n neuen Wörtern hoher Gewichtung M(m-1-j) ... M(m-d-j) der ersten Größe M, die das von der ersten Subtraktionsschaltung (44) oder ggf. von der Additionsschaltung (56) erzeugte Ergebnis sind;

\* Speicherung der beiden letzten neuen Wörter hoher Gewichtung M(m-1-j) M(m-2-j) von M im zweiten und im ersten Register (10, 40), wobei die Bits geringer Gewichtung der Wörter M(m-1-j) und M(m-2-j) zu den Ausgängen des zweiten und des ersten Registers (10, 40) gerichtet sind, wobei die Größen Q(q-1-j) und M(m-3-j) ... M(m-d-j) zur Speicherung aus dem Coprozessor entnommen werden;

\* Laden von L Nullen in das dritte Register (11).

2. Verfahren nach Anspruch 1, bei dem die Schritte E1, E3 und E6 folgendermaßen verändert werden:

E1 - Laden der Größe M und von L Nullen in ein drittes Register (11); Laden des Worts M(m-1) in ein erstes Register (40), wobei das Bit hoher Gewichtung dieses Worts sich am Ausgang dieses ersten Registers (40) befindet; Laden von L Nullen, entsprechend einem Wort M(m), in ein zweites Register (10); Laden der Größe D in ein viertes Register (12), wobei das Bit geringster Gewichtung des Worts D(d-1) sich am Ausgang dieses vierten Registers (12) befindet;

E3 - Laden des Worts D(d-2) in das zweite Register (10), wobei das Bit geringer Gewichtung dieses Worts sich am Ausgang des zweiten Registers (10) befindet; Laden des Worts M(m-2-j) in ein siebtes Register (43), wobei das Bit geringer Gewichtung dieses Worts zum Ausgang dieses Registers gerichtet ist;

E6 - wenn das Ergebnis der letzten Subtraktion des Schritts E4 negativ ist:

\* Verschiebung des Inhalts des dritten und des vierten Registers (11, 12);

\* Multiplikation der Größe D mit der Größe Q(q-1-j) in der zweiten Multiplikationsschaltung (20);

\* Subtraktion des von der zweiten Multiplikationsschaltung (20) erzeugten Ergebnisses von den vom dritten Register (11) gelieferten Bits in der ersten Subtraktionsschaltung (44);

\* wenn das von der ersten Subtraktionsschaltung (44) gelieferte Ergebnis negativ ist:

- Addition der Größe D, geliefert vom vierten Register (12), zum Ergebnis, das von der ersten Subtraktionsschaltung (44) erzeugt wird, in der Additionsschaltung (56),
- Subtraktion einer Größe mit L Bits, gebildet aus einem Bit geringer Gewichtung auf Eins und aus L-1 Bits hoher Gewichtung auf Null, von der Größe Q(q-1-j), die ursprünglich im ersten Register (40) vorhanden ist, wobei die Subtraktion in der vierten Subtraktionsschaltung (46) erfolgt, und

- Speicherung des Ergebnisses dieser letzten Subtraktion im ersten Register (40);

* Speicherung der beiden letzten Wörter des von der ersten Subtraktionsschaltung (44) oder ggf. der Additionsschaltung (56) erzeugten Ergebnisses mit der Bezeichnung M(m-1-j) ... M(m-2-j) im dritten, zweiten und ersten Register (11, 10, 40), wobei die Größen M(m-3-j) ... M(m-d-j) im dritten Register (11) gespeichert werden und die Größen M(m-3-j) ... M(m-d-j) entsprechender Gewichtung in der Größe M ersetzen, wobei die Bits geringer Gewichtung der Wörter M(m-1-j) und M(m-2-j) zu den Ausgängen des zweiten und des ersten Registers (10, 40) gerichtet sind;

* Laden von L Nullen in das dritte Register (11).

3. Verfahren nach Anspruch 1, dadurch gekennzeichnet, daß der Schritt E2 die folgenden Unter-Schritte aufweist:

E21 - Initialisierung der Testschaltung (35) und der Subtraktionsschaltungen (29, 28) auf Null;

E22 - Verschiebung eines Bits des dritten und des vierten Registers (11, 12), wobei das dritte Register (11) als Bit hoher Gewichtung das Bit hoher Gewichtung des zweiten Registers (10) wiedergewinnt, wobei der Ausgang des vierten Registers (12) mit seinem Eingang verbunden ist; Subtraktion, in der dritten Subtraktionsschaltung (29), des Bits hoher Gewichtung des zweiten Registers (10) vom Bit geringer Gewichtung des vierten Registers (12), wobei die fünfte Subtraktionsschaltung (28) eine Subtraktion des Bits geringer Gewichtung des dritten Registers (11) von Null durchführt;

E23 - Verschiebung von 2*L-1 Bits des dritten und des vierten Registers (11, 12), wobei der Ausgang des vierten Registers (12) mit seinem Eingang verbunden ist, wobei der Eingang des dritten Registers (11) mit dem Ausgang der fünften Subtraktionsschaltung (28) verbunden ist; Subtraktion der 2*L-1 Bits aus dem dritten Register (11) von Null in der fünften Subtraktionsschaltung (28); Subtraktion des Ergebnisses aus der fünften Subtraktionsschaltung (28) von den Bits des vierten Registers (12);

E24 - Speicherung des letzten Übertrags der dritten Subtraktionsschaltung (29) in der Testschaltung (35) und Erzeugung, am Ausgang dieser Testschaltung, einer binären Größe, die dem Komplement des gespeicherten Übertrags entspricht;

E25 - Verschiebung eines Bits des ersten und zweiten des Registers (40, 10), wobei das Bit hoher Gewichtung des ersten Registers (40) als Bit geringer Gewichtung des zweiten Registers (10) geladen wird, wobei die in der Testschaltung (35) gespeicherte binäre Größe als Bit geringer Gewichtung in das erste Register (40) geladen wird;

E26 - Initialisierung der dritten und der fünften Subtraktionsschaltung (28, 29);

E27 - 2*L-1-malige Wiederholung der Schritte E2 bis E6, wobei die fünfte Subtraktionsschaltung (28) eine Subtraktion des Inhalts des dritten Registers (11) von Null durchführt, wenn der vorher gespeicherte Übertrag gleich Eins ist, oder die fünfte Subtraktionsschaltung (28) eine Subtraktion des Inhalts des dritten Registers (11) vom Inhalt des vierten Registers (12) durchführt, wenn der vorher gespeicherte Übertrag gleich Null ist.

**Claims**

1. Method of implementing integer division, in a coprocessor, of a first data item M, binary coded over m words M(m-1) ... M(1) M(0) of L bits, by a second data item D, binary coded over d words D(d-1) ... D(1) D(0) of L bits, with m, L and d integers and d < m, the result, denoted Q, being coded over q words Q(q-1) Q(q-2) ... Q(1) Q(0) of L bits, with q = m-d+1 and Q (q-1) = 00 ... 00 or 00 ... 01, the said method being characterised in that it comprises the following stages:

E1 - loading of the word M(m-1) into a first register (40), the high-order bit of this word being at the output of this first register (40); loading of L zeros, corresponding to a word M(m), into a second register (10); loading of L zeros into a third register (11); loading of the word D(d-1) into a fourth register (12), the lowest-order bit of this word being at the output of this fourth register (12); and

repetition of the following stages E2 to E6 q times, with an index j varying from 0 to q-1:

E2 - integer division of the two highest-order words of the first data item M, which are contained in the second and first registers (10, 40), by the highest-order word of the second data item D, the content of the fourth register (12), and storage of the L low-order bits of the result of the integer division, corresponding to a first intermediate data item Q(q-1-j), in the first register (40) and in fifth and six registers (16, 17);

E3 - loading of the word D(d-2) into a second register (10), the low-order bit of this word being at the output of the second register (10); and loading of the words M (m-1-j) and M(m-j) in series into the third register (11), the low-order bits being oriented towards the output of this third register; loading of the word M(m-2-j) into a seventh register (43), the low-order bit of this word being oriented towards the output of the seventh register;

E4 - * shifting of the contents of the second and fourth registers (10, 12) towards serial inputs of a first and of a second multiplication circuits (19, 20) and of the contents of the third and seventh registers (11, 43), with the outputs of these registers being looped back onto their inputs;

* multiplication of D(d-2) by Q(q-1-j) in the first multiplication circuit (19);
* multiplication of D(d-1) by Q(q-1-j) in the second multiplication circuit (20);
* subtraction of M(m-j)M(m-j-1) from D(d-1) *Q(q-1-j) in a first subtraction circuit (44);
* subtraction of M(m-2-j) from the data item produced by the first subtraction circuit (44), in a second subtraction circuit (45), the word M(m-2-j) having been delayed in a delay cell (47);
* subtraction of the data item produced by the second subtraction circuit (45) from D (d-2)*Q(q-1-j) in a third subtraction circuit (29), the result of the subtraction being a second intermediate data item Z(m-j) binary coded over 2*L bits; and
* test of the second intermediate data item Z (m-j), result of the second subtraction, in a test circuit (35), in order to discover whether the first intermediate data item Q(q-1-j) is higher than a sought-for value of one of the words of the result Q or whether it corresponds to a sought-for value of one of these words;

E5 - if the result of the last subtraction of stage E4 is positive:

* decrementation by one unit of the first intermediate data item Q(q-1-j) by shifting of the content of the first register (40); subtraction of an L-bit data item, formed by one low-order bit at one and of L-1 high-order bits at zero, from the first intermediate data item Q(q-1-j) initially present in the first register (40), the subtraction being carried out in a fourth subtraction circuit (46); and storage of the data item produced by the fourth subtraction circuit (46) in the first register (40); and
* repetition of the preceding stage E4;

E6 - if the result of the last subtraction of stage E4 is negative:

* loading of the words M(m-j) ... M(m-d-j) into the third register (11) and of the data item D into the fourth register (12);
* shifting of the content of the third and fourth registers (11, 12), with the output of the fourth register (12) being looped back onto its input so as to keep D(d-1) in this register;
* multiplication of the data item D by the data item Q(q-1-j) in the second multiplication circuit (20) in order to obtain a third intermediate data item B coded over d-1 words of L bits;
* subtraction, in the first subtraction circuit (44), of the third intermediate data item B produced by the second multiplication circuit (20) from the d+1 highest-order words of the first data item M supplied by the third register (11), except during the first iteration where the word M(m) and the d highest-order words of the first data item M are considered; and test of the result of the subtraction;
* if the result supplied by the first subtraction circuit (44) is negative:

  - addition of the data item D, supplied by the fourth register (12), to the result produced by the first subtraction circuit (44), in an addition circuit (56),
  - subtraction of an L-bit data item, formed by one low-order bit at one and of L-1 high-order bits at 0, from the data item Q(q-1-j) initially present in the first register (40), the said subtraction being carried out in the fourth subtraction circuit (46), and
  - storage of the data item produced by the fourth subtraction circuit (46) in the first register (40) ;

* production of d new high-order words M(m-l-j) ... M(m-d-j) of the first data item M which are the result produced by the first subtraction circuit (44) or by the addition circuit (56), as the case may be;

* storage of the last two new high-order words M(m-1-j) M(m-2-j) of M in the second and first registers (10, 40), the low-order bits of the words M(m-1-j) and M(m-2-j) being oriented towards the outputs of the second and first registers (10, 40), the data items Q(q-1-j) and M(m-3-j) ... M(m-d-j) being output out of the coprocessor for the purposes of memory storage;

* loading of L zeros into the third register (11).

2. Method according to Claim 1, the stages E1, E3 and E6 being modified in the following way:

E1 - loading of the data item M and of L zeros into a third register (11); loading of the word M(m-1) into a first register (40), the high-order bit of this word being at the output of this first register (40); loading of L zeros, corresponding to a word M(m), into a second register (10); loading of the data item D into a fourth register (12), the lowest-order bit of the word D(d-1) being at the output of this fourth register (12);

E3 - loading of the word D(d-2) into the second register (10), the low-order bit of this word being at the output of the second register (10); loading of the word M(m-2-j) into a seventh register (43), the low-order bit of this word being oriented towards the output of this register;

E6 - if the result of the last subtraction of stage E4 is negative:

* shifting of the content of the third and fourth registers (11, 12);

* multiplication of the data item D by the data item Q(q-1-j) in the second multiplication circuit (20);

* subtraction of the result produced by the second multiplication circuit (20) from the bits supplied by the third register (11), in the first subtraction circuit (44);

* if the result produced by the first subtraction circuit (44) is negative:

  - addition of the data item D, supplied by the fourth register (12), to the result produced by the first subtraction circuit (44), in the addition circuit (56)

  - subtraction of an L-bit data item formed by one low-order bit at one and of L-1 high-order bits at 0, from the data item Q(q-1-j) initially present in the first register (40), the subtraction being carried out in the fourth subtraction circuit (46), and

  - storage of the result of this last subtraction in the first register (40);

* storage of the last two words of the result produced by the first subtraction circuit (44) or by the addition circuit (56), as the case may be, denoted M(m-1-j) ... M(m-d-j), in the third, second and first registers (11, 10, 40), the data items M(m-3-j) ... M(m-d-j) being stored in memory in the third register (11) and being substituted for the data items M(m-3-j) ... M(m-d-j) of corresponding orders in the data item M, the low-order bits of the words M(m-1-j) and M(m-2-j) being oriented towards the outputs of the second and first registers (10, 40); and

* loading of L zeros into the third register (11).

3. Method according to Claim 1, characterised in that the stage E2 comprises the following sub-stages:

E21 - initialisation to zero of the test circuit (35), of the third and of a fifth subtraction circuits (29, 28);

E22 - shifting of the third and fourth registers (11, 12) by one bit, the third register (11) recovering, as high-order bit, the high-order bit of the second register (10), the fourth register (12) having its output linked to its input; subtraction, in the third subtraction circuit (29), of the high-order bit of the second register (10) with the low-order bit of the fourth register (12), the fifth subtraction circuit (28) carrying out subtraction of the low-order bit of the third register (11) with zero;

E23 - shifting of the third and fourth registers (11, 12) by 2*L-1 bits, the output of the fourth register (12) being linked to its input, the input of the third register (11) being linked to the output of the fifth subtraction circuit (28); subtraction of the $2^{*}L-1$ bits exiting the third register with zero in the fifth subtraction circuit (28); subtraction of the result exiting the fifth subtraction circuit (28) with the bits of the fourth register (12);

E24 - memory storage of the last carry from the third subtraction circuit (29) in the test circuit (35) and production, at the output of this test circuit, of a binary data item representing the complement of the memory-stored carry;

E25 - shifting of the first and second registers (40, 10) by one bit, the high-order bit of the first register (40) being loaded as low-order bit of the second register (10), the binary data item stored in memory in the test circuit (35) being loaded as low-order bit into the first register (40);

E26 - initialisation of the third and fifth subtraction circuits (29, 28);

E27 - repetition of stages E2 to E6 $2^*L$-1 times, the fifth subtraction circuit (28) carrying out a subtraction of the content of the third register (11) with zero if the previously memory-stored carry is equal to one or the fifth subtraction circuit (28) carrying out a subtraction of the content of the third register (11) with the content of the fourth register (12) if the previously memory-stored carry is equal to zero.

FIG_1

EP 0 947 913 B1

FIG_2

FIG_3

FIG_4

## FIG_5

## FIG_6